Europäisches Patentamt

European Patent Office

Office européen des brevets

(19)

(11) **EP 1 152 234 A2**

(12) **EUROPÄISCHE PATENTANMELDUNG**

(43) Veröffentlichungstag:
07.11.2001 Patentblatt 2001/45

(51) Int Cl.⁷: **G01N 11/04**

(21) Anmeldenummer: 01110629.1

(22) Anmeldetag: 30.04.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **03.05.2000 DE 20007911 U**

(71) Anmelder: **WGE Dr. Bures GmbH & Co. KG**
**14624 Dallgow (DE)**

(72) Erfinder: **Bures, Klaus-Dieter Dr.**
**12307 Berlin (DE)**

(74) Vertreter: **Richter, Werdermann & Gerbaulet**
**Neuer Wall 10**
**20354 Hamburg (DE)**

(54) **Viskosimeter**

(57)     Das Viskosimeter umfasst Strömungswiderstände mit kleinstmöglicher Dicke und kleinem Volumen im Verhältnis zu allen anderen parallelen und nachfolgenden Kapillaren in einem Fließleitungssystem mit zwei Leitungszweigen (L1,L2), das in dem ersten Leitungszweig (L1) mindestens drei druckabschwächende Elemente, hinter der dem Verzweigungspunkt (102) folgenden Kapillare (103) ein Druckmanometer (104) mit einem sich an dieses anschließenden größeren Gefäß (105) weitere miteinander verbundene (107) Kapillare (106,108) mit unterschiedlichen Durchmessern und mit großen Volumen, das dem 100- bis 1000fachen des KV-Strömungswiderstandes (221) in dem zweiten Leitungszweig (L2) entspricht, einen Verzweigungspunkt (109) zu einem Differenzdruckaufnehmer (122) enthält, dem Kapillare (110,112) mit unter schiedlichen Durchmessern bis zu einer Zusammenführung (113) in eine gemeinsame Auslassleitung (114) folgen, wobei in dem zweiten Leitungszweig (L2) auf den Verzweigungspunkt (102) der ein KV-Strömungswiderstand (221) folgt, an den sich weitere großvolumige Leitungen anschließen und zu dem Verzweigungspunkt (118) der Gegenseite des Differenzdruckaufnehmers (122) führen, wobei sich dem Verzweigungspunkt (118) weitere Kapillare (115,117) mit unterschiedlichen Durchmessern und Längen anschließen, die in der gemeinsamen Auslassleitung (114) zusammengeführt sind.

Fig.16

EP 1 152 234 A2

**Beschreibung**

Die Erfindung betrifft einen Viskosimeter zur Messung der relativen, intrinsischen oder inhärenten Viskosität einer Lösung in einem Lösungsmittel gemäß dem Oberbegriff der Ansprüche 1, 3 und 4.

Nach dem Stand der Technik wird zwischen der relativen, der spezifischen sowie der inhärenten Viskosität und schließlich der Grenzviskositätszahl (intrinsischen Viskosität) unterschieden. Unter der relativen Viskosität versteht man den Quotienten der Viskosität der Lösung, z. B. eines Polymers, zu der Viskosität des reinen Lösungsmittels. Die inhärente Viskosität ergibt sich als der Quotient aus dem natürlichen Logarithmus der relativen Viskosität dividiert durch die Konzentration in Gramm des gelösten Stoffes pro Millimeter Lösung. Hieraus ergibt sich die intrinsische Viskosität als Grenzwert der inhärenten Viskosität für den Fall, dass die vorgenannte Konzentration gegen Null geht. Grundlegend für Viskositätsmessungen ist das so genannte Hagen-Poiseuillesche-Gesetz. Nach dem Stand der Technik sind Einzelkapillarmessungen bekannt, bei denen die Volumenrate des Lösungsflusses und der Druckabfall des Flusses gemessen und hieraus in Kenntnis der geometrischen Abmessungen der Kapillare die Viskositäten der untersuchten Flüssigkeiten ermittelt werden können. Der Nachteil dieses Messverfahrens liegt in dem ungünstigen Signal-Rausch-Verhältnis. Das Rauschen wird zum wesentlichen teil durch hochfrequente Störsignale der Pumpe erzeugt, die für die Förderung des zu untersuchenden Stoffes benötigt wird. Des weiteren erzeugen unregelmäßige Flussraten des Stoffes einschließlich der Gegendruckfluktuationen an Strömungswiderständen Störsignale. Schließlich ist die Viskosität bekanntlich temperaturabhängig, weshalb Temperaturschwankungen während der Messung das Messergebnis verfälschen können.

Nach der US-A-3 808 877 wird zur Lösung dieses Problems ein Durchflussbegrenzer zwischen der Lösungseingabestelle und der Messkapillare zur Erzeugung einer konstanten Flussrate verwendet. Die relative Viskosität wird durch separate Messungen des Druckabfalls an der Kapillare bei dort durchströmenden Polymer-Lösungen und dem puren Solventen ermittelt. Aus dieser Druckschrift ist ebenfalls eine Anordnung von zwei Kapillaren in parallel verlaufenden Leitungszweigen bekannt, von denen der eine mit der Polymerlösung und der andere mit dem Solventen gefüllt ist. Grundsätzlich sind auch getrennte Messungen der genannten Stoffe derart möglich, dass der erste Stoff die erste und der zweite Stoff die zweite Kapillare einer Leitung während der Messung durchströmt, wobei sich diese Kapillaren in Serie hintereinander geschaltet befinden. Voraussetzung zur Durchführung einer exakten Viskositätsbestimmung ist hierbei insbesondere die geometrische Übereinstimmung des Durchmessers und der Länge der verwendeten Kapillaren, desgleichen eine Temperaturgleichheit an den Messorten.

Nach der EP 0 181 224 wird ein Kapillarviskosimeter mit zwei in Reihe geschalteten Kapillaren vorgeschlagen, bei denen die eine als Referenzkapillare nur für den Solventen und die zweite als Analysekapillare für die Polymer-Solvent-Lösung dienen soll. Die Kapillaren bestehen aus langen, schmalen Röhren, in die das Lösungsmittel durch eine Pumpe eingeführt wird. Zwischen der Pumpe und der Referenzkapillare befindet sich eine Widerstandsstrecke in Form einer Röhre mit einem kleinen Durchmesser, die zur Erzeugung eines Gegendruckes dienen soll. Dieser Widerstandsstrecke kann gegebenenfalls noch ein weiterer Puls-Dämpfer vorgeschaltet sein. Der in der Referenzkapillare gemessene Differenzdruck (Druckabfall) wird ebenso wie der Druckabfall, der an der Analysekapillare gemessen wird, einem Differentialverstärker bzw. einer Auswerteinheit zugeführt. Die Eingabestelle für die zu untersuchende Substanz, z. B. ein Polymer, befindet sich zwischen der Referenz- und der Analysekapillare, so dass die Analysekapillare von einer aus dem Polymer und dem Lösungsmittel bestehenden Lösung durchflossen wird. Diese in Serie geschaltete Anordnung ist insoweit veränderbar, wie die Eingabestelle für das Probesubstrat auch vor der ersten Kapillare liegen kann.

In diesem Falle wird die erste Kapillare zur Analysen- Kapillare, nach deren Durchlauf die Lösung in ein Rückhaltegefäß strömt, welche die Aufgabe hat, die Lösung weiter zu verdünnen, so dass von der Referenzkapillare im wesentlichen nur das Lösungsmittel gemessen wird. In der beschriebenen Anordnung kann zwischen der Eingabestelle z. B. für das Polymer und der Analysekapillare ein Gel-Permeations-Chromatograph geschaltet sein, in dem Polymerstoffe in einer Verdünnungslösung entsprechend ihrer Molekulargröße separierbar sind.

Neben der vorbeschriebenen Reihenschaltung sind auch noch Kapillarbrückenviskosimeter bekannt, die sich durch eine relativ hohe Empfindlichkeit auszeichnen. Bei der Brückenschaltung wird eine Leitung in zwei parallel laufende Leitungsteile getrennt, in denen sich jeweils zwei hintereinander geschaltete Kapillaren befinden. Ein zwischen der jeweils ersten und zweiten Kapillare liegender Ort eines jeden Leitungszweiges ist mit dem entsprechenden Ort des anderen Leitungszweiges über eine Verbindungsleitung verbunden, in der sich ein hoch empfindlicher Druckaufnehmer befindet.

Nach der in der EP 0 113 560 beschriebenen Ausführungsform ist ferner vor der zweiten Kapillaren eines Leitungszweiges ein Rückhaltebecken in Form einer schaltbaren Bypass-Anordnung vorgesehen. Solange - und insbesondere ohne Einbeziehung des Bypasses - alle vorhandenen vier Kapillare von ein und derselben Flüssigkeit durchströmt werden, bleibt die Verbindungsleitung drucklos. Schaltet man hingegen über die Bypass-Leitung ein Vorratsreservoir ein, so wird die zweite Messkapillare im wesentlichen nur von dem Lösungsmittel durchströmt, wodurch ein Druckgefälle gegenüber dem anderen Messzweig aufgrund der verschiedenen Viskositäten der Flüssigkeiten entsteht. Dieses Druckgefälle ist registrierbar und kann zur Ermittlung der Viskosität verwendet werden.

Daneben sind aus der EP 0 083 524 noch Anordnungen mit nur einer Kapillaren bekannt, die mehrere Meter lang bei einem Durchmesser zwischen 0,2 und 0,3 mm sein soll. Diese Kapillare mit einer Gesamtlänge von z. B. 3 m wird in Form einer Schleife mit einem Durchmesser von mindestens 10 cm gewickelt.

Es ist Aufgabe der vorliegenden Erfindung, die eingangs genannte Vorrichtung dahingehend zu verbessern, dass die bisher infolge der verwendeten Kapillaren auftretende Detektordispersion vermieden bzw. wesentlich verringert wird und damit die Messgenauigkeit der Vorrichtung erhöht wird, so dass geringste Druckunterschiede messbar sind.

Diese Aufgabe wird bei einem Viskosimeter der eingangs beschriebenen Art durch die in den Ansprüchen 1, 3 und 4 angegebenen Merkmale gelöst.

Die Erfindung besteht somit nach Anspruch 1 darin, dass im Probenstromzweig ein Strömungswiderstand mit kleinstmöglichem Volumen verwendet wird (im nachfolgenden KV-Strömungswiderstand genannt), der unmittelbar hinter der Eingabestelle der Stromaufteilung eingebracht ist. Danach weist das Viskosimeter Strömungswiderstände, wie scheiben-oder blattförmige Venturi-Düsen oder andersartige KV-Strömungswiderstände mit kleinstmöglicher Dicke und kleinem Volumen im Verhältnis zu allen anderen parallelen und nachfolgenden Kapillaren in einem Fließleitungssystem mit zwei Leitungszweigen auf. Dieses Fließleitungssystem enthält in dem ersten Leitungszweig mindestens drei druckabschwächende Elemente, beispielsweise Kapillare, wobei hinter der dem Verzweigungspunkt folgenden Kapillare ein Druckmanometer mit einem sich an dieses anschließenden größeren Gefäß vorgesehen ist, wobei hinter weiteren miteinander verbundenen Kapillaren mit unterschiedlichen Durchmessern und mit großem Volumen, das dem 100- bis 1000fachen des KV-Strömungswiderstandes in dem zweiten Leitungszweig entspricht, ein Verzweigungspunkt zu einem differenziellen Druckaufnehmer bzw. Differenzdruckaufnehmer führt, dem miteinander verbundene Kapillare mit unterschiedlichen Durchmessern bis zur Zusammenführung in einer gemeinsamen Auslassleitung folgen. In dem zweiten Leitungszweig folgt auf den Verzweigungspunkt der KV-Strömungswiderstand, an den sich weitere großvolumige Leitungen anschließen und zu dem Verzweigungspunkt der Gegenseite des differenziellen Druckaufnehmers bzw. Differenzdruckaufnehmers führen, wobei sich dem Verzweigungspunkt weitere miteinander verbundene Kapillare mit unterschiedlichen Durchmessern und mit unterschiedlichen Längen anschließen, die in die gemeinsame Auslassleitung zusammengeführt sind.

Das Viskosimeter umfasst einen Zulauf, der in einer Verzweigung mündet, von der in einem ersten Leitungszweig eine Kapillare über eine weite Strecke und mit einem vergleichsweise großen Volumen zu einem Manometer (Absolutdruckmesser) und von diesem von einem noch größeren Gefäß führt, das 100- bis 1000fach größeres Volumen als das Volumen des KV-Strömungswiderstandes in dem zweiten Leitungszweig beträgt, wobei von dem Gefäß eine Verbindungsleitung zu einem druckschwächenden Element führt, das eine Kapillare, eine Düse, eine Fritte oder eine geeignete, den Druck in der Fließleitung abschwächende Einleitung ist. Das druckschwächende Element ist über eine Verbindung mit einer weiteren Kapillare mit einem großen Volumen verbunden, die in den Verzweigungspunkt mündet, wobei der in der Verbindungsleitung zwischen den beiden Verzweigungspunkten in den beiden Leitungszweigen angeordnete differenzielle Druckmesser bzw. Differenzdruckaufnehmer hoch empfindlich die geringsten Druckunterschiede zwischen den beiden Verzweigungspunkten der Fließleitung misst. Die sich an dem Verbindungspunkt anschließende weitvolumige Kapillare führt über eine Verbindung zu einer druckschwächenden weiteren Kapillaren, wobei die Druckschwächung nicht identisch mit jener im oberen Abschnitt der Fließleitung sein muss. Der Kapillaren folgt eine Verbindungsleitung in die Zusammenführung der beiden Leitungszweige zu einer gemeinsamen Auslassleitung, der die gemeinsame Ableitung der Fließmittel aus verschiedenen Fließlinien ermöglicht. Von der Verzweigung in dem zweiten Leitungszweig führt ein druckschwächendes Element, das unterschiedlich ausgeführt sein kann, direkt in ein großvolumiges Gefäß und von dort in eine Leitung mit einem großen Innendurchmesser, die über die Verzweigung mit dem differenziellen Druckmesser bzw. Differenzdruckaufnehmer verbunden ist, wobei hier der Differenzdruckaufnehmer so geschaltet ist, dass dieser bei einem Druckabfall am Verzweigungspunkt ein positives Signal generiert, wobei sich an dem Verzweigungspunkt eine Leitung mit einem großen Innendurchmesser anschließt, die über die Verbindung mit einer druckschwächenden Kapillare verbunden ist und den Zugang zur Zusammenführung und der Auslassleitung darstellt.

Das Viskosimeter nach Anspruch 3 weist ebenfalls Strömungswiderstände, wie scheiben- oder blattförmige Venturi-Düsen oder andersartige KV-Strömungswiderstände mit kleinstmöglicher Dicke und kleinem Volumen im Verhältnis zu allen anderen parallelen und nachfolgenden Kapillaren in einem Fließleitungssystem mit zwei Leitungszweigen auf. Zum Unterschied zum Viskosimeter nach Anspruch 1 weist das Fließleitungssystem drei parallele Fließkreise auf, von denen mindestens zwei Fließkreise durch einen differenziellen Druckaufnehmer bzw. Differenzdruckaufnehmer verbunden sind. Diese drei Fließkreise stellen eine Analogie zur thomsonschen Brücke dar. Die Anordnung selbst besteht dabei aus einem Zulauf, der in eine Verzweigung mündet und sich in zwei Leitungszweige aufteilt, wobei einer der beiden Leitungszweige ein druckschwächendes Element, einen sich anschließenden Verzweigungspunkt zu einem differenziellen Druckaufnehmer bzw. Differenzdruckaufnehmer und ein druckschwächendes Element in der Zuleitung zu einer Zusammenführung umfasst, die in eine Auslassleitung mündet. Der von dem Verzweigungspunkt ausgehende andere Leitungszweig umfasst ein druckschwächendes Element, das zu einer Verzweigung führt, die zum einen in ein zu einer Zusammenführung führendes großvolumiges Gefäß und zum anderen zu einer Widerstandskapillare führt, die in der Zusammenführung mit dem differenziellen Druckaufnehmer bzw. Differenzdruckaufnehmer und ferner mit einer Widerstandskapillare in der von der Zusammenführung zu einer weiteren Zusammenführung geführten Leitung in Verbindung steht, wobei die Widerstandskapillare auslassseitig über die Zusammenführung mit einem druckabschwächenden Element verbunden ist, das über einen Leitungsabschnitt in die Zusammenführung und somit in die Auslassleitung mündet.

Die Erfindung nach Anspruch 4 besteht darin, dass das Viskosimeter Strömungswiderstände, wie scheiben- oder blattförmige Venturi-Düsen oder andersartige KV-Strömungswiderstände mit kleinstmöglicher Dicke und kleinem Volumen im Verhältnis zu allen anderen parallelen und nachfolgenden Kapillaren, aufweist, wobei diese Strömungswiderstände unmittelbar hinter den Eingabestellen der Stromaufteilung eingebracht sind und im anderen Teilzweig hinter der Stromaufteilung eine lange Röhre mit einem großen Innendurchmesser folgt, die außerdem dadurch näher bestimmt ist, dass das Fassungsvermögen dieser langen Röhre das 100- bis 1000-fache des KV-Strömungswiderstandes beträgt.

Der KV-Strömungswiderstand kann ein sehr kurzes Kapillarstück mit geringem Innendurchmesser sein, der deutlich geringer ist als alle anderen folgenden bzw. parallel verlaufenden Kapillaren, eine so genannte Mikro-System-Technik-Komponente bei der in Siliziumbasismaterial durch photolytische Methoden Gravuren eingebracht werden und die in Kombination mit externen makroskopischen Strömungswiderständen zum erfindungsgemäßen Viskosimetern verschaltet werden können.

Ferner kann ein KV-Strömungswiderstand auch dadurch geschaffen werden, dass der Strömungswiderstände z. B. in Form von scheiben- oder blattförmigen Venturi-Düsenkörpern mit kleinstmöglicher Dicke verwendet werden. Entscheidend hierbei ist wieder die geringe räumliche bzw. volumetrische Abmessung, woraus der Vorteil erwächst, dass aufgrund der günstigen Volumenverhältnisse die Probe in zeitlich nahezu infinitesimale Signalgrößen zerlegt werden kann und damit eine systematische Verbreiterung der Messsignale durch das Messsystem, wie sie bei allen nach dem Stand der Technik verwendeten Messküvetten zu beobachten ist, vermieden wird. Diese Verbreiterung musste bisher beispielsweise mathematisch korrigiert werden, soweit dies überhaupt möglich war. Weitere Ausbildungen des Viskosimeters sind in den Ansprüchen 2 bis 9 beschrieben. So sollte z. B. im Falle des Venturi-Düsenkörpers die Dicke kleiner oder größer als 2 mm, bevorzugterweise 2 mm bzw. 3mm sein. Vorzugsweise ist die Venturi-Düsenkörper-Durchströmöffnung kreis- oder schlitzförmig. Alternativ hierzu kann der Düsenkörper jedoch auch mehrere lochartige Durchbrechungen von 1μ bis 10μ aufweisen. Die Kanäle der MSt-Komponenten können Strukturen von 10μ bis 100μ Breite aufweisen. Ähnliches gilt für s. g. fused silica capilliries und Kapillaren mit denen sich aufgrund ihres Innendurchmessers entsprechende Volumenverhältnis herstellen lassen.

Grundsätzlich ist der erfindungsgemäße KV-Strömungswiderstand in allen Viskosimetern, in denen bisher Kapillaren eingesetzt worden sind, verwendbar. Bevorzugt wird jedoch wegen der erzielbaren hohen Messgenauigkeit eine Brückenanordnung mit zwei parallel verlaufenden Flusswegen gewählt, in denen von jeweils drei in Serie angeordneten Strömungswiderständen mindestens jeweils in einem Zweig ein KV-Strömungswiderstand ist. Ansonsten kann auf die aus dem Stand der Technik, z. B. aus der EP 0 113 560 beschriebene Brückenanordnung zurückgegriffen werden.

Weiterhin bevorzugt befindet sich ein KV-Strömungswiderstand, z.B. eine Venturi-Düse oder ein MST-Kanal in Flussrichtung gesehen unmittelbar hinter einer Gel-Permeations-Chromatographie-Säule, die in ihrem Aufbau sowie in ihrer Funktionsweise grundsätzlich nach dem Stand der Technik bekannt ist und beispielsweise in einer Viskosimeteranordnung nach der EP 0 181 224 bereits eingesetzt wird.

Im Hinblick auf in Serie oder in einer verzweigten Brückenanordnung vorliegende Venturi-Düsen kann zur Erhöhung der Messgeschwindigkeit ein volumetrisch großes Rückhaltegefäß im Leitungsnetz vorgesehen werden. Die Funktion dieser Rückhaltegefäße ist grundsätzlich nach dem Stand der Technik, sowohl in Serienschaltungen als auch in Brückenanordnungen aus den vorgenannten Druckschriften bekannt.

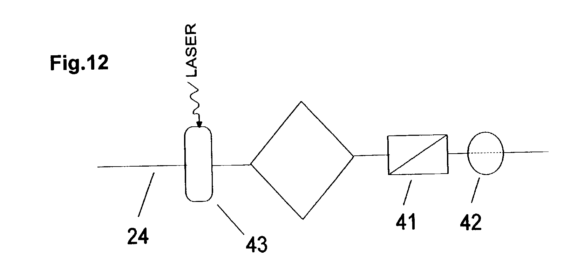

Zur Kontrolle oder zur weiteren Detektierung kann es vorteilhaft sein, im Leitungsnetz einen Refraktionsdetektor und oder einen Membran-Osmose-Detektor anzuordnen. Weitere Detektoren sind in spezifischen Kombinationen denkbar und in den Fig. 12 bis 14 dargestellt.

Zur Vermeidung von Temperaturschwankungen und damit zur Erhöhung der Messgenauigkeit empfiehlt es sich schließlich, das gesamte Leitungsnetz in einem thermisch konstanten abgeschlossenen Raum, vorzugsweise in einem thermisch regelbaren Wärmebad, anzuordnen. Die Erfindung wird im Folgenden anhand konkreter Ausführungsbeispiele weiter erläutert. Es zeigen

Fig. 1          das Strömungsprofil einer Probe in einer Kapillare,

Fig. 1A     das Strömungsprofil einer Probe bei hoher Flussrate bzw. hohem Molekulargewicht,

Fig. 2     den Signalverlauf einer Probe, die die Küvette mit rechteckigem Strömungsprofil durchläuft,

Fig. 3     einen Kurvenlauf entsprechend Fig. 2 unter Berücksichtigung des realen Strömungsprofils einer Probe, sowie gestrichelt unter Berücksichtigung des in Fig.1A dargestellten Strömungsverlaufes,

Fig. 4     eine Darstellung zweier Messsignale verschiedener Detektoren mit unterschiedlicher Schichttiefe,

Fig. 5     den Signalverlauf bei Verwendung eines erfindungsgemäßen KV-Strömungswiderstandes,

Fig. 6 bis 14     jeweils schematische Anordnungen erfindungsgemäßer Viskosimeter,

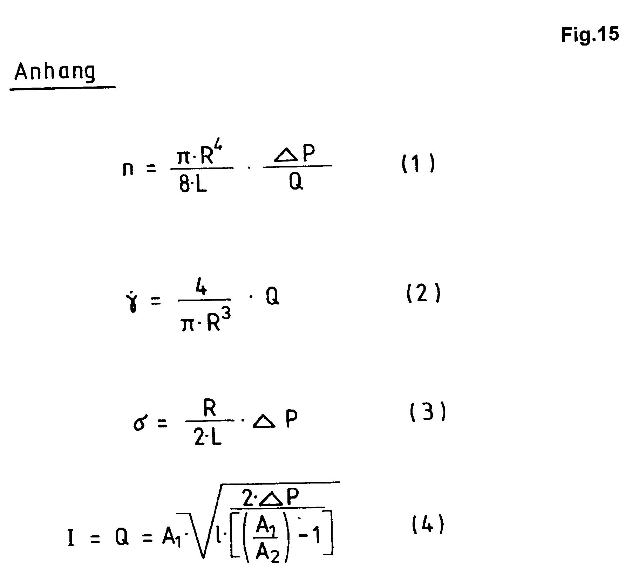

Fig. 15     Formelanhang,

Fig. 16     die Anordnung in Form eines Fließschemas einer weiteren Ausführungsform des erfindungsgemäßen Viskosimeters und

Fig. 17     die Anordnung in Form eines Fließschemas mit drei parallelen Fließkreisen einer weiteren Ausführungsform des erfindungsgemäßen Viskosimeters.

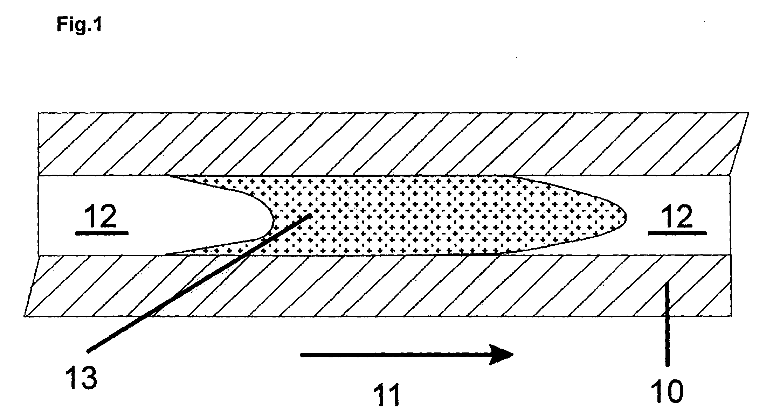

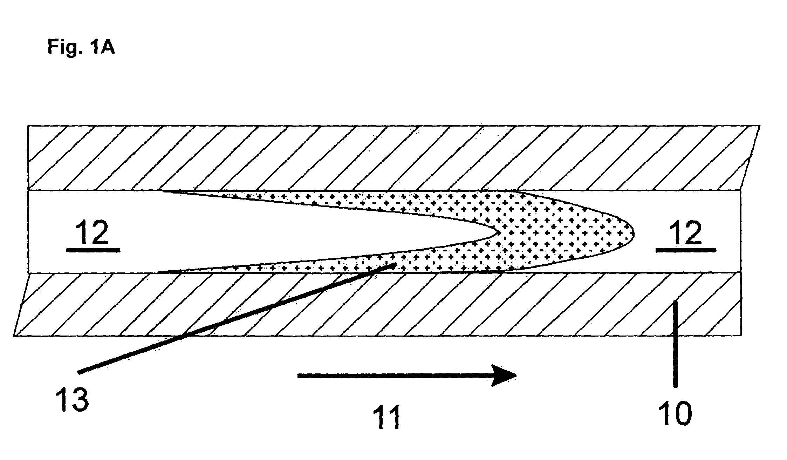

Wird eine Kapillare 10 von einer Flüssigkeit in Richtung eines in Fig. 1 dargestellten Teils 11 durchströmt, so zeigt sie das nach dem Stand der Technik bekannte parabolische Strömungsprofil. Wie aus Fig. 1 ersichtlich, gilt dies auch für den Fall, dass in einen Eluenten 12 z. B. in Form eines Tropfens eine Probe 13 gegeben wird.

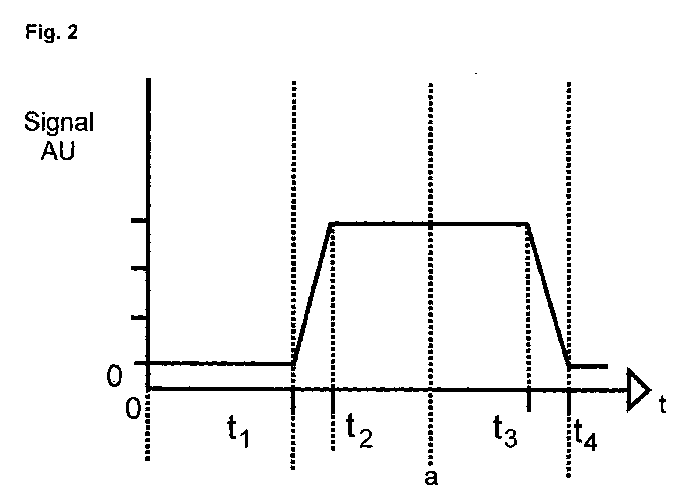

Bei endlicher Schichttiefe einer Küvette 10 und einer idealen Probe mit rechteckigem Strömungsprofil ergibt sich der in Fig. 2 dargestellte Signalverlauf, bei dem zurzeit t1 die Probe in die Küvette eintritt, wobei sich bis zurzeit t2 eine Mischung zwischen der Probe und dem Eluent in der Küvette befindet. Ab dem Zeitpunkt t2 füllt die Probe die Küvette vollständig aus. Und zwar bis zurzeit t3, ab der Eluent 12 nachgefordert wird. Zum Zeitpunkt t4 hat die Probe 13 die Küvette vollständig verlassen, es befindet sich hierin nur noch der Eluent.

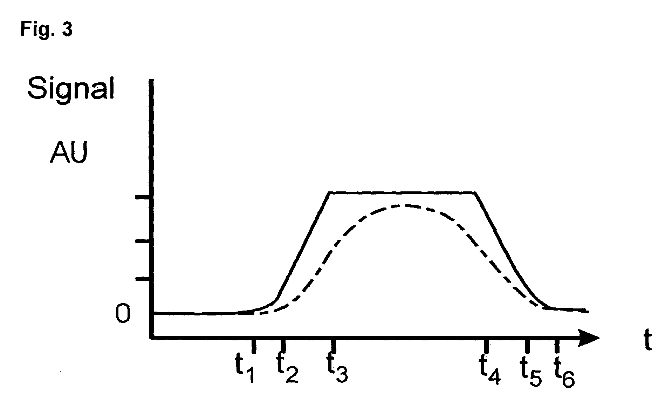

Berücksichtigt man das reale Strömungsprofil nach Fig. 1, ergibt sich der aus Fig. 3 ersichtliche Signalverlauf, in dem während des Zeitraums zwischen t1 und t2 die Probe 13 mit ihrer parabolischen Front in die Küvette einströmt. Entsprechendes gilt beim Verlassen der Probe 13 im Hinblick auf den Zeitraum zwischen den Zeitpunkten t5 und t6, in dem der Kurvenverlauf nicht linear ist. Durch diesen nicht linearen Kurvenverlauf wird jedoch die Analyse erheblich kompliziert. Eine weitere Komplikation tritt ein, wenn im Falle hoher Flussraten und Proben mit hohem Molekulargewicht entsprechender Konzentration sich ein Strömungsprofil gemäß Fig. 1A ausbildet. Für diese Fälle ergibt sich der in Fig. 3 gestrichelt dar gestellte Signalverlauf, der für sich nur relative Bezüge gestattet.

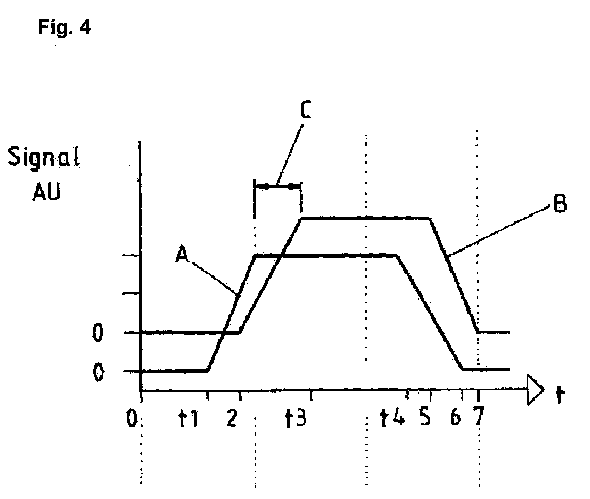

Gänzlich unauflösbar wird das Signal, wenn zwei Detektoren Ausgangssignale A und B aussenden, die beispielsweise den in Fig. 4 dargestellten idealisierten zeitlichen Verlauf haben. Regelmäßig kommt es hierbei zu einem so genannten Offset C der Detektoren aufgrund der Wegstreckendifferenzen für den Probenpfropf 13. Ferner ergibt sich aufgrund unterschiedlicher Schichttiefen der Küvetten 10 eine unterschiedliche Flankensteilheit beider Signale A und B .

Die einzelnen Zeitpunkte betreffen folgende Zustände:

t1:     Probe tritt in die Küvette 10 des ersten Detektors ein.

t2:     Küvette 10 ist vollständig gefüllt, die Probe 13 tritt in die zweite Küvette ein.

t3:     Die zweite Küvette ist ebenfalls vollständig gefüllt.

t4:     Die Probe verlässt die erste Küvette.

t5:     Die Probe verlässt die zweite Küvette.

t6:     Die erste Küvette ist wieder vollständig mit Eluent gefüllt und

t7:     Die zweite Küvette ist ebenfalls mit Eluent gefüllt. Hierbei wurde die parabolische Form des Strömungsprofils noch nicht berücksichtigt, was zu einer weiteren Komplizierung, wie in Fig. 3 dargestellt, für einen Signalverlauf führt.

Abgesehen von den unterschiedlichen Signalverläufen gibt es in der analytischen Praxis weiterhin das Problem, dass vielfach keine Plateaus ausgebildet werden, was zur Folge hat, dass intrinsische Eigenschaften und systematische Fehler nicht mehr getrennt werden können.

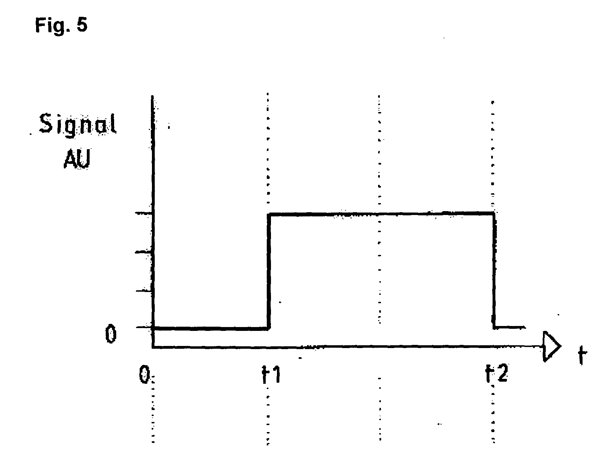

Abhilfe schafft die vorliegende Erfindung, wie Fig.5 mit dem dortigen Kurvenverlauf für ein Viskosimeter mit kleiner Dicke des KV-Strömungswiderstandes zeigt. Die Zeitpunkte t1 und t2 stellen den Eintritt der Probe 13 in den KV-Strömungswiderstand bzw. den Austritt der Probe hieraus dar. Vor und nach diesen Zeitpunkten t1 und t2 liegt jeweils der Eluent in dem KV-Strömungswiderstand vor. Wie aus Fig. 5 deutlich ersichtlich, erhält man nicht nur quasi Signal-Rechteckverläufe, d. h. einen Fortfall der Anstiegs- und Abfallflanken, sondern im Falle der Verwendung von zwei Detektoren auch eindeutige Auflösungsmöglichkeiten. Dies ergibt sich auch aus folgenden theoretischen Überlegungen:

Der Druckabfall, der durch die Druckaufnehmer registriert wird, ist mit der

$$n = \frac{\pi \cdot R^4}{8 \cdot L} \cdot \frac{\Delta P}{Q} \qquad (1)$$

$$\dot{\gamma} = \frac{4}{\pi \cdot R^3} \cdot Q \qquad (2)$$

$$\sigma = \frac{R}{2 \cdot L} \cdot \Delta P \qquad (3)$$

$$I = Q = A_1 \cdot \sqrt{l \cdot \left[ \left( \frac{A_1}{A_2} \right)^2 - 1 \right]} \qquad (4)$$

Viskosität durch die bekannten folgenden Relationen verbunden:

Hierbei sind

n= Viskosität einer Newtonschen Flüssigkeit.
L= Dicke des KV-Strömungswiderstandes.
A= Querschnitt der Strömungsöffnung ( oder Frittenpore)
R= Radius der Öffnung (oder Frittenpore)
Q= Flussrate durch die Öffnung und
p= Druckabfall an der Öffnung über die Dicke (bzw. Durchströmlänge).

Im Unterschied zu dem Kapillarviskosimeter nach dem Stand der Technik wird die als Gleichung 4 oben dargelegte Venturi-Gleichung in die Viskositätsermittlung entsprechend der Gleichung 1 einbezogen. Damit wird der bei Kapillarviskosimetern auftretende, sich aus der unterschiedlichen Reibungskraft ergebende Fehler vermieden, was durch nachfolgende Umformung der Gleichung 1 deutlich wird:

$$F_r = R^2 \pi \triangle p$$

Entlang des Weges, den eine Probe in einer Kapillare zurücklegt, ergibt sich eine unterschiedliche Reibungskraft sowie andere Scherkräfte, so dass trotz einer angenommenen Homogenität der Probe die detektierten Drücke verschieden sind. Demgegenüber wird bei der vorliegenden Erfindung nicht wie bei Kapillarmessungen üblich ein Mittelwert der Druckdifferenz gebildet, sondern der jeweilige jeweils mit der Viskosität korrespondierende Druck exakt angezeigt.

Der KV-Strömungswiderstand kann prinzipiell auch als Fritte, Filter oder Membran ausgebildet sein, sofern er eine Strömungskanalverjüngung darstellt und gleichzeitig eine kleinstmögliche Dicke (bzw. Länge) besitzt.

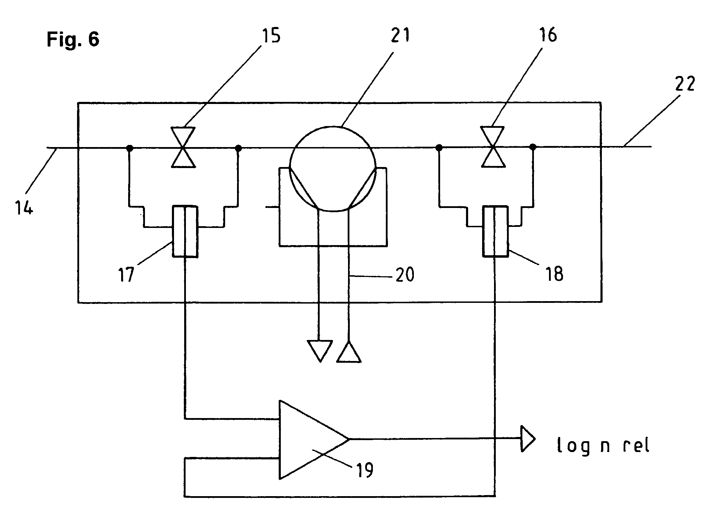

Die Anordnung der KV-Strömungswiderstände in unterschiedlichen Aufbauten ist aus Fig. 6 bis 14 ersichtlich.

Die Anordnung nach Fig. 6 besitzt einen Eingang 14, in den der Eluent 12 gegebenenfalls nach Filtration, eingeführt wird. Die Durchführleitung besitzt zwei hintereinander liegende KV-Strömungswiderstand 15 und 16, über denen jeweils mit Druckaufnehmern 17 und 18 der Druckabfall gemessen werden kann. Beide von den Druckaufnehmern 17 und 18 gemessenen Werte werden auf einen Differentialverstärker 19 gegeben, dort verstärkt und in üblicher Weise aufbereitet.

Die Probelösung wird über die Zuleitung 20 in die Schleife eines Ventils 21 gegeben. An dem KV-Strömungswiderstand 15 wird somit der Druckabfall gemessen, der sich aufgrund des Durchströmens des reinen Lösungsmittels (Eluent) ergibt, während am Düsenkörper 16 der Druckabfall gemessen wird, den eine aus Lösungsmittel und Probe bestehende Lösung auslöst. Die Lösung verlässt die Messvorrichtung über den Ausgang 22.

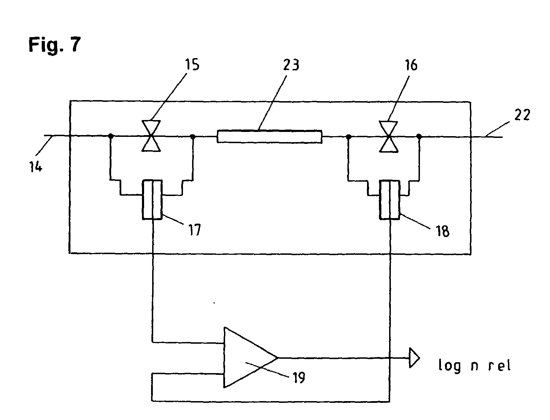

Die in Fig. 7 dargestellte Anordnung besitzt im Unterschied zu der vorbeschriebenen Anordnung statt der Schleife des Ventils 21 ein Rückhaltegefäß 23. Im Unterschied zu der vorbeschriebenen Anordnung wird das Lösungsmittel mit der Probe in dem ersten KV-Strömungswiderstand 15 untersucht, der hier als Analysegerät dient. Kommt die Probe in das Rückhaltegefäß 23, so erfährt sie dort eine erhebliche Verdünnung und wird ferner zeitlich so retardiert, dass der KV-Strömungswiderstand 16 nur oder zumindest im wesentlichen nur das Lösungsmittel vermisst. Die Widerstände dieser Anordnung müssen nicht abgeglichen werden, da deren Veränderungen keinen Einfluss auf das Ergebnis haben.

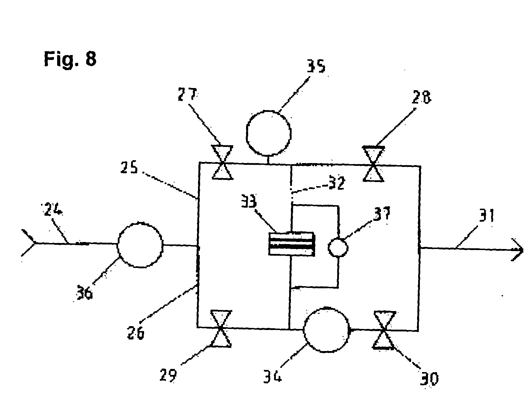

Fig. 8 zeigt die prinzipiell bekannte Brückenanordnung, bei der die Eingangsleitung 24 in zwei Teilleitungen 25 und 26 aufgeteilt wird, die jeweils in Serie angeordnete KV-Strömungswiderstände 27 und 28 bzw. 29 und 30 aufweisen. Die Leitungen 25 und 26 vereinigen sich hinter den KV-Strömungswiderständen 28 und 30 zu einer Austrittsleitung 31. Zwischen dem KV-Strömungswiderstand 27 und 28 einerseits und dem KV-Strömungswiderstand 29 und 30 andererseits befindet sich eine Brückenleitung 32 mit einem hoch empfindlichen Druckaufnehmer 33. Zusätzlich sind noch vorhanden ein Rückhaltegefäß der vorbeschriebenen Art in Leitung 26, und zwar in Flussrichtung gesehen vor dem KV-Strömungswiderstand 30 ein Kompensationsgefäß 35 in der Leitung 25 für die temperaturbedingte Ausdehnung der Flüssigkeit, sowie ein Reservoir 36, aus dem die Probenlösung in das Eluat gegeben werden kann. Zum Schutz der hoch empfindlichen Druckmessvorrichtung 33 ist ein Sicherheitsventil 37 parallel geschaltet.

In dieser Brückenanordnung können beispielsweise die KV-Strömungswiderstände 27 und 29 mit kleinstmöglicher Dicke ausgebildet sein, während die Strömungswiderstände 28 und 30 als Kapillare ausgebildet sind. Ebenso ist es möglich, dass nur 29 als KV-Strömungswiderstand ausgebildet ist und die Zuleitung 25 als sehr lange Kapillare mit großem Innendurchmesser eingebracht wird, alle anderen teile 27,28 und 30 als Kapillare ausgebildet sind. Desgleichen können auch die Teile 27 bis 29 als KV-Strömungswiderstand mit kleinstmöglicher Dicke und Teil 30 als Kapillare oder alle Teile 27 bis 30 als KV-Strömungswiderstand der vorgenannten Art ausgebildet sein.

Die durch die Eingangsleitung 24 und mit der Probe versetzte Lösung wird etwa im Verhältnis 1:1 geteilt und durchfließt die Leitungen 25 und 26. Nach Durchlauf des KV-Strömungswiderstandes 29 erfährt die dortige Lösung im Rückhaltegefäß 34 eine Verdünnung und weiterhin eine Extrusion des dort befindlichen reinen Lösungsmittels. Hingegen erfährt die Lösung in dem Zweig 25 keine Konzentrationsänderung, wodurch an den KV-Strömungswiderständen bzw. Kapillaren 28 und 30 jeweils unterschiedliche Druckabfälle registriert werden, die durch den Druckaufnehmer 33 messbar sind. Der gemessene Druck ist proportional der Viskosität der Probelösung in dem Messzweig 25.

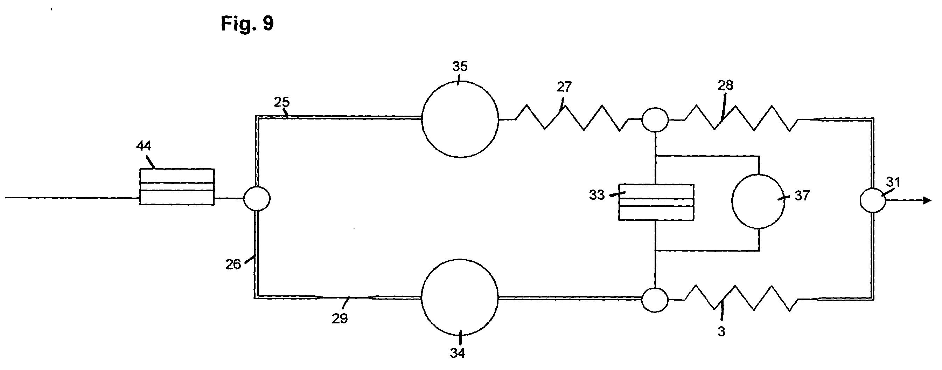

Fig. 9 weist in der Eingangsleitung einen Einlassdruckaufnehmer 44 auf, der den Druckabfall über die gesamte Kapillaranordnung misst. In der Zweigleitung 25 wird vom Verzweigungspunkt mit einem Gefäß von großem Innendurchmesser ein Verdünnungsgefäß 35 und stromabwärts eine vorbenannte Kapillare angeschlossen. Der zweite Leitungsteil 26 ist bis zum KV-Strömungswiderstand 29 vergleichsweise kurz um dann hinter 29 in ein Verdünnungsgefäß zu münden. Die Volumina des Gefäßes und der zuführenden Kapillaren sind groß im Vergleich zum Volumen von 29. Der hinter dem beim Druckaufnehmer 33 liegende Teil der Anordnung entspricht wieder der Anordnung von Fig. 8. Das Wirkungsprinzip von Fig. 9 unterscheidet sich von Fig. 8. dadurch, dass hierbei gänzlich anders im vorderen Teil der Anordnung die Signalermittlung erfolgt. Sobald der Probenpfropfen in den Teilzweig 26 eintritt und den KV-Strömungswiderstand erreicht wird ein Signalwert ermittelt, da zeitgleich im Teilzweig 25 der dort eluierte Probenteil die weiten, großvolumigen Gefäße und das Verdünnungsgefäß durchströmen muss. Hierbei tritt die schon beschriebene Verdünnung und Retardierung auf, so dass der in Teilzweig 26 registrierte Druckanstieg nicht kompensiert wird (wie dies unter der in Fig. 8 beschriebenen Anordnung der Fall ist) sondern gemessen werden kann. Die hinter dem Diagonalzweig (bei 33) folgenden Komponenten dienen nun lediglich dazu durch geeignete Wahl der Widerstände das Aufteilungsverhältnis des Stromes zwischen 25 und 26 festzulegen. Durch diese Anordnung lässt sich zur weiteren Empfindlichkeitssteigerung mehr als 50 % der Probe nutzen.

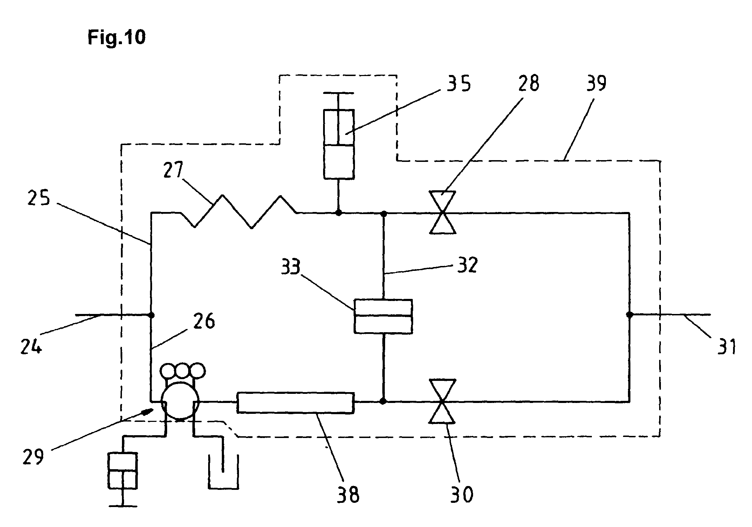

Nach Fig. 10, die im wesentlichen ebenso wie die Anordnung nach Fig. 8 aufgebaut ist, ist zwischen dem ersten und zweiten Strömungswiderstand 29 bzw. 30 in dem Zweig 26 eine Gel-Permeations-Chromatograph-Säule 38 eingefügt, aus der heraustretend der Polymerpfropf unmittelbar in die Verjüngung der Düse 30 eintritt. Der Druckabfall tritt nach kürzester Wegstrekke auf, wobei die Probe nicht verbreitert wird. Vorzugsweise befindet sich die gesamte Anordnung in einem abgeschlossenen Raum 39, der eine Temperaturkonstanz gewährleistet. Bei der durchgeführten differenziellen Messung kann gegebenenfalls eine Kompensation der Temperaturflussschwankung, falls erforderlich, vorgenommen werden.

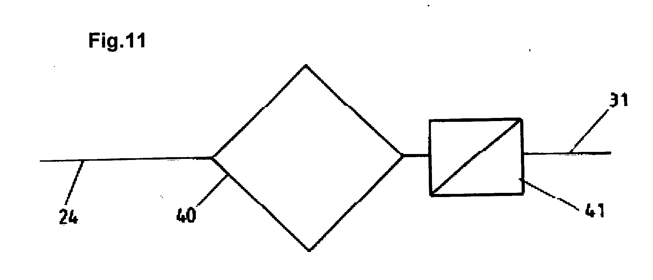

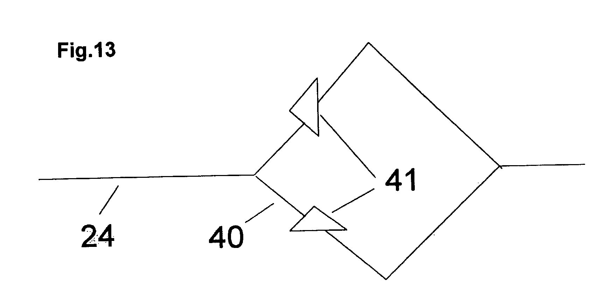

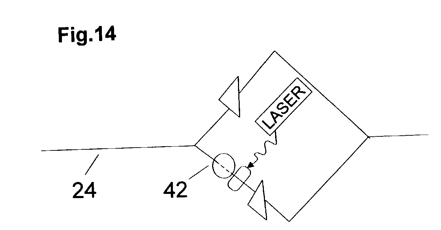

Wie in Fig.11 angedeutet, kann die beispielsweise nach einer der Fig. 6 bis 14 dargestellte Anordnung 40 auch mit einem Refraktionsdetektor 41 oder prinzipiell weiteren Detektoren verbunden werden, die weitere Aufschlüsse über die physikalische oder chemische Konstitution der Probe liefern können. Hierbei kann wie in Fig. 13 dargestellt der RI-Detektor auch aufgeteilt in die beiden Teilzweige eingebracht werden. Gleiches gilt für weitere Detektoren wie Membran-Osmometer, Laser-Streulichtdetektor und weitere. Die beiden möglichen Einbringungsarten sind in Fig. 12 und 14 dargestellt.

Des weiteren besteht die Möglichkeit, eine blockartige Anordnung der Detektoren, z. B. durch Aneinanderreihung, vorzunehmen, wobei dann der erste Detektor das Viskosimeter ist. Unter Weglassung eines Teilstromes wird ein Einzelkapillarviskosimeter erhalten, wobei dann vor der Messkapillaren ein Gefäß oder ein Behälter mit einem vergleichsweise großen Volumen vorgeschaltet ist. Die Druckmessung wird dann zwischen dem großvolumigen Gefäß und der Messkapillaren durchgeführt. Es steht dann genügend Probelösung in dem großvolumigen Gefäß zur Verfügung, um das Lösungsmittel zu verdrängen, so dass die Probe dann dem ersten Messzyklus zugeführt wird. Auf diese Weise werden hochreine Messungen durchgeführt, da nur ausschließlich Probelösung der Messung zugrunde liegt.

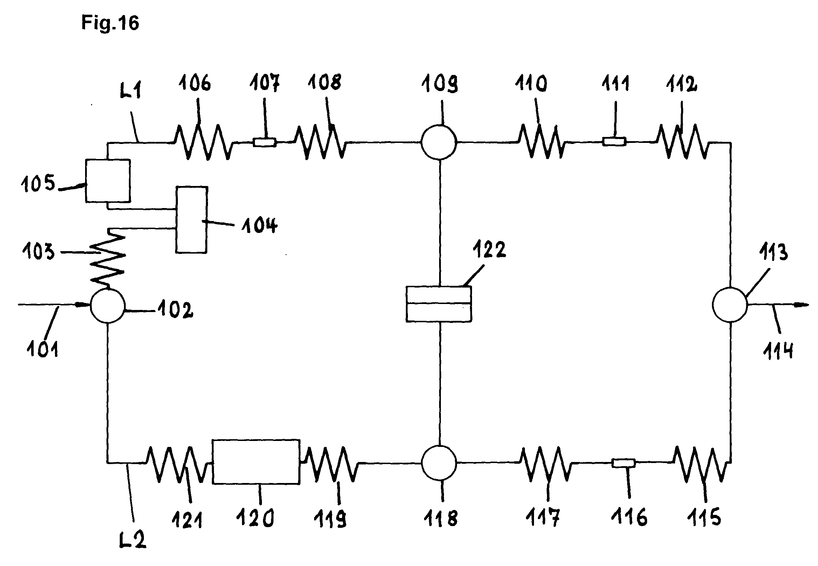

Nach einer weiteren Ausführungsform der Erfindung gemäß Fig. 16 ist eine Anordnung für ein Viskosimeter mit einem Fließleitungssystem mit zwei Leitungszweigen L1, L2 vorgesehen. Der erste Leitungszweig L1 umfasst mindestens drei druckabschwächende Elemente, wobei hinter der einem Verzweigungspunkt 102 folgenden Kapillare 103 ein Druckmanometer 104 mit einem sich an dieses anschließenden größeren Gefäß 105 vorgesehen ist. In der Leitung nach dem Verzweigungspunkt 102 sind weitere über eine Verbindung 107 verbundene Kapillare 106, 108 mit unterschiedlichen Durchmessern und mit großen Volumen vorgesehen, das dem 100- bis 1000fachen eines KV-Strömungswiderstandes 221 in dem zweiten Leitungszweig L2 entspricht. In der von dem Verzweigungspunkt 102 führenden Leitung des Leitungszweiges L1 schließt sich an die Kapillare 106, 108 ein weiterer Verzweigungspunkt 109 an, der zu einem differenziellen Druckaufnehmer bzw. Differenzdruckaufnehmer 122 führt. An diesem Verzweigungspunkt 109 schließt sich ein Leitungsabschnitt mit zwei über eine Verbindung 111 miteinander verbundenen Kapillare 110, 112 mit unterschiedlichen Durchmessern an. Der die Kapillare 110, 112 aufweisende Leitungsabschnitt des Leitungszweiges L1 führt in eine Zusammenführung 113 und von dort in eine Auslassleitung 114. In dem anderen Leitungszweig L2 schließt sich an dem Verzweigungspunkt 102 der KV-Strömungswiderstand 221 an, an dem sich weitere großvolumige Leitungen anschließen. Der die großvolumigen Leitungen und den KV-Strömungswiderstand 221 aufnehmende Leitungsabschnitt führt zu einem Verzweigungspunkt 118 der über einen Leitungsabschnitt mit dem Verzweigungspunkt 109 verbunden ist, wobei in diesem Leitungsabschnitt der differenzielle Druckaufnehmer bzw. Differenzdruckaufnehmer 122 angeordnet ist. Von dem Verzweigungspunkt 118 in dem Leitungszweig L2 schließt sich ein Leitungsabschnitt an, der zu der Zusammenführung 113 und somit in die Auslassleitung 114 führt. In diesem Leitungsabschnitt sind Kapillare 115, 117 mit unterschiedlichen Durchmessern und mit unterschiedlichen Längen angeordnet, die über eine Verbindung 116 miteinander verbunden sind. Bei dieser Anordnung für das Viskosimeter erfolgt die Flüssigkeitszuführung über den Zulauf 101 und von der Verzweigung 102 in den Leitungszweig L1 bzw. in den Leitungszweig L2. Von dieser Verzweigung 102 führt ein Leitungsabschnitt zu dem Verzweigungspunkt 109.

In diesem Leitungsabschnitt ist die Kapillare 103 über eine weite Strecke mit einem vergleichsweise großen Volumen zu einem Manometer (Absolutdruckmesser) 104 geführt und von diesem zu einem noch größeren Gefäß 105, an das sich dann der Leitungsabschnitt mit den beiden Kapillaren 106, 108 anschließt. In dem dem Verzweigungspunkt 109 anschließenden Leitungsabschnitt sind die beiden über eine Verbindung 111 miteinander verbundenen Kapillare 110, 112 mit unterschiedlichen Durchmessern angeordnet. Von dem Gefäß 105 in dem Leitungszweig L1 führt eine Verbindungsleitung zu einem druckschwächenden Element 106, das eine Kapillare, eine Düse, eine Fritte oder eine geeignete, den Druck in der Fließleitung abschwächende Einrichtung ist, wobei auch alle anderen eingesetzten druckschwächenden Elemente in gleicher Weise ausgebildet sein können. Dieses druckschwächende Element 106 ist über die Verbindung 107 mit einer weiteren Kapillare 108 mit einem großen Volumen verbunden, die in den Verzweigungspunkt 109 mündet, wobei der in der Verbindungsleitung zwischen den beiden Verzweigungspunkten 109, 118 den beiden Leitungszweigen L1, L2 angeordnete differenzielle Druckmesser bzw. Differenzdruckaufnehmer 122 hoch empfindlich die geringsten Druckunterschiede zwischen den beiden Verzweigungspunkten 109, 118 der Fließleitung ist. Die sich an dem Verbindungspunkt 109 in dem anschließenden Leitungsabschnitt angeordnete weitvolumige Kapillare 110 ist über die Verbindung 111 mit einer druckschwächenden Kapillare 112 verbunden, wobei die Druckschwächung nicht identisch mit jener im oberen Abschnitt der Fließleitung sein muss.

Von der Verzweigung 102 zweigt der Leitungszweig L2 ab. In diesem Leitungszweig L2 ist das druckschwächende Element 121 angeordnet, das unterschiedlich ausgeführt sein kann. An dieses druckschwächende Element 121 schließt sich direkt das großvolumige Gefäß 120 an, von dem dann eine Leitung 119 mit einem großen Innendurchmesser zu der Verzweigung 118 führt. Von dieser Verzweigung 118 geht es über den Leitungsabschnitt mit dem eingebauten differenziellen Druckmesser bzw. Differenzdruckaufnehmer 122 zu der Verzweigung 109. Im Bereich des Leitungszweiges L2 führt dann von der Verzweigung 118 ein Leitungsabschnitt zu der Auslassleitung 114 und in diesem Leitungsabschnitt ist dann eine Leitung 117 mit einem großen Innendurchmesser vorgesehen. Über die Verbindung 116 führt dann die Leitung zu der druckschwächenden Kapillare 115. Der differenzielle Druckmesser bzw. Differenzdruckaufnehmer 122 ist dabei so geschaltet, dass er bei einem Druckabfall an dem Verzweigungspunkt 118 ein positives Signal generiert. Dies ist auch die Art und Weise, wie das Viskositätssignal generiert wird.

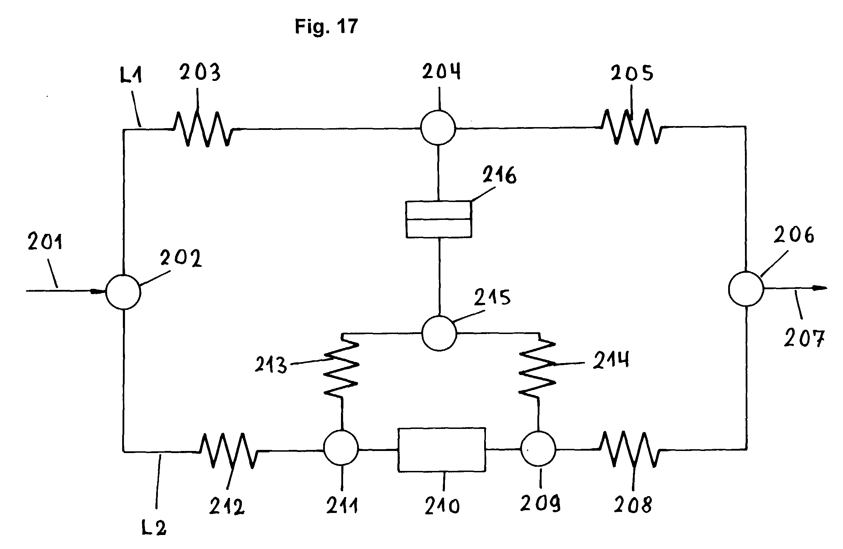

Das Viskosimeter gemäß Fig. 17 weist ein vom Fließschema des Viskosimeters gemäß Fig. 16 abweichendes Fließschema insofern auf, als hier drei parallele Fließkreise vorgesehen sind, die eine Analogie zur so genannten thomsonschen Brücke darstellen. Diese Anordnung zeichnet sich insbesondere im Falle geringer Flussraten aus, bei denen schon die, wenn auch geringen Widerstände von Zuleitungen, die Genauigkeit der Messung beeinflussen. Wie Fig. 17 zeigt, ist hier bei dem Viskosimeter ein Fließleitungssystem mit zwei Leitungszweigen L1, L2 vorgesehen. Dieses Fließleitungssystem umfasst drei parallele Fließkreise, von denen mindestens zwei Fließkreise durch einen differenziellen Druckaufnehmer bzw. Differenzdruckaufnehmer 216 verbunden sind. Die Anordnung selbst besteht aus einem Zulauf 201, der in eine Verzweigung 202 mündet und sich in zwei Leitungszweigen L1, L2 aufteilt. Der Leitungszweig L1 umfasst einen Leitungsabschnitt mit einem druckschwächenden Element 203, einen sich daran anschließenden Verzweigungspunkt 204 und ein weiteres druckschwächendes Element 205. Dieser Leitungsabschnitt mündet in eine Zusammenführung 206 mit einer sich daran anschließenden Auslassleitung 207. Der andere von dem Verzweigungspunkt 202 ausgehende Leitungszweig L2 enthält ein druckschwächendes Element 212, an das sich eine Verzweigung 211 anschließt. Im Anschluss an diese Verzweigung 211 schließt sich ein großvolumiges Gefäß 210 an, wobei in dem sich daran anschließenden Leitungsabschnitt eine weitere Verzweigung 209 und ein druckabschwächendes Element 208 angeordnet sind. Dieser Leitungsabschnitt führt zur Auslassleitung 207. Die beiden Verzweigungen 211, 209 sind über Leitungsabschnitte mit einer Zusammenführung 215 verbunden, die wiederum über einen Leitungsabschnitt mit dem Verzweigungspunkt 204 verbunden ist. In diesem Leitungsabschnitt ist der differenzielle Druckaufnehmer bzw. Differenzdruckaufnehmer 216 angeordnet. In den beiden Leitungsabschnitten zwischen den Verzweigungen 211 und 209 und der Zusammenführung 215 sind je eine Widerstandskapillare 213, 214 angeordnet. Aufgrund dieser Anordnung wird ein Fließleitungssystem mit drei parallelen Fließkreisen erhalten.

**Patentansprüche**

1. Viskosimeter zur Messung der relativen, intrinsischen oder inhärenten Viskosität einer Lösung (13) in einem Lösungsmittel (12), mit mindestens einem Strömungswiderstand (15,16; 27 bis 30) und einer Eingabestelle (20, 21; 36; 38) für die zu untersuchende Lösung (13) in einem Leitungssystem (14, 22; 24 bis 26, 31) sowie jeweiligen Druckmessern (17, 18; 33) an dem Strömungswiderstand (15, 16; 27 bis 30), die mit einem Differentialverstärker (19) gekoppelt sind,
   **dadurch gekennzeichnet,**
   **dass** das Viskosimeter (40) Strömungswiderstände (15, 16; 27 bis 30), wie scheiben- oder blattförmige Venturi-Düsen oder andersartige KV-Strömungswiderstand mit kleinstmöglicher Dicke und kleinem Volumen im Verhältnis zu allen anderen parallelen und nachfolgenden Kapillaren in einem Fließleitungssystem mit zwei Leitungszweigen (L1, L2) aufweist, das in dem ersten Leitungszweig (L1) mindestens drei druckabschwächende Elemente, beispielsweise Kapillare, enthält, wobei hinter der dem Verzweigungspunkt (102) folgenden Kapillare (103) ein Druckmanometer (104) mit einem sich an dieses anschließenden größeren Gefäß (105) vorgesehen ist, wobei hinter weiteren miteinander verbundenen (107) Kapillaren (106, 108) mit unterschiedlichen Durchmessern und mit großen Volumen, das dem 100- bis 1000fachen des KV-Strömungswiderstandes (221) in dem zweiten Leitungszweig (L2) entspricht, ein Verzweigungspunkt (109) zu einem differenziellen Druckaufnehmer bzw. Differenzdruckaufnehmer (122) führt, dem miteinander verbundene (111) Kapillare (110, 112) mit unterschiedlichen Durchmessern bis zur Zusammenführung (113) in eine gemeinsame Auslassleitung (114) folgen, wobei in dem zweiten Leitungszweig (L2) auf den Verzweigungspunkt (102) der KV-Strömungswiderstand (221) folgt, an den sich weitere großvolumige Leitungen anschließen und zu dem Verzweigungspunkt (118) der Gegenseite des differenziellen Druckaufnehmers bzw. Differenzdruckaufnehmers (122) führen, wobei sich dem Verzweigungspunkt (118) weitere miteinander verbundene (116) Kapillare (115, 117) mit unterschiedlichen Durchmessern und mit unterschiedlichen Längen anschließen, die in der gemeinsamen Auslassleitung (114) zusammengeführt sind.

2. Viskosimeter nach Anspruch 1,
   **dadurch gekennzeichnet,**
   **dass** das Viskosimeter einen Zulauf (101) umfasst, der in eine Verzweigung (102) mündet, von der in einem ersten Leitungszweig (L1) eine Kapillare (103) über eine weite Strecke und mit einem vergleichsweise großen Volumen zu einem Manometer (Absolutdruckmesser) (104) und von diesem zu einem noch größeren Gefäß (105) führt, das 100- bis 1000faches größeres Volumen als das Volumen des KV-Strömungswiderstandes (121) in dem zweiten Leitungsweg (L2) beträgt, wobei von dem Gefäß (105) eine Verbindungsleitung zu einem druckschwächenden Element (106) führt, das eine Kapillare, eine Düse, eine Fritte oder eine geeignete, den Druck in der Fließleitung abschwächende Einrichtung ist, dass das druckschwächende Element (106) über eine Verbindung (107) mit einer weiteren Kapillare (108) mit einem großen Volumen verbunden ist, die in den Verzweigungspunkt (109) mündet, wobei der in der Verbindungsleitung zwischen den beiden Verzweigungspunkten (109, 118) in den beiden Leitungszweigen (L1, L2) angeordnete differenzielle Druckmesser bzw. Differenzdruckaufnehmer (122) hoch empfindlich die geringsten Druckunterschiede zwischen den beiden Verzweigungspunkten (109, 118) der Fließleitung misst, dass die sich an den Verbindungspunkt (109) anschließende weitvolumige Kapillare (110) über eine Verbindung (111) zu einer druckschwächenden Kapillare (112) führt, wobei die Druckschwächung nicht identisch mit jener im oberen Abschnitt der Fließleitung sein muss, dass der Kapillare (112) eine Verbindungsleitung in die Zusammenführung (113) der beiden Leitungszweige (L1, L2) zur gemeinsamen Auslassleitung (114) folgt, der die gemeinsame Ableitung der Fließmittel aus verschiedenen Fließlinien ermöglicht, dass von der Verzweigung (102) in dem zweiten Leitungszweig (L2) ein druckschwächendes Element (121), das unterschiedlich ausgeführt sein kann, direkt in ein großvolumiges Gefäß (120) und von dort in eine Leitung (119) mit einem großen Innendurchmesser führt, die über die Verzweigung (118) mit dem differenziellen Druckmesser bzw. Differenzdruckaufnehmer (122) verbunden ist, wobei hier der Differenzdruckaufnehmer (122) so geschaltet ist, dass dieser bei einem Druckabfall am Verzweigungspunkt (118) ein positives Signal generiert, und dass sich an dem Verzweigungspunkt (118) eine Leitung (117) mit einem großen Innendurchmesser anschließt, die über die Verbindung (116) mit einer druckschwächenden Kapillare (115) verbunden ist und den Zugang zur Zusammenführung (113) und der Auslassleitung (114) darstellt.

3. Viskosimeter zur Messung der relativen, intrinsischen oder inhärenten Viskosität einer Lösung (13) in einem Lösungsmittel (12), mit mindestens einem Strömungswiderstand (15, 16; 27 bis 30) und einer Eingabestelle (20, 21; 36; 38) für die zu untersuchende Lösung (13) in einem Leitungssystem (14, 22; 24 bis 26, 31) sowie jeweiligen Druckmessern (17, 18; 33) an dem Strömungswiderstand (15, 16; 27 bis 30), die mit einem Differentialverstärker (19) gekoppelt sind,
**dadurch gekennzeichnet,**
**dass** das Viskosimeter (40) Strömungswiderstände (15, 16; 27 bis 30), wie scheiben- oder blattförmige Venturi-Düsen oder andersartige KV-Strömungswiderstände mit kleinstmöglicher Dicke und kleinem Volumen im Verhältnis zu allen anderen parallelen und nachfolgenden Kapillaren in einem Fließleitungssystem mit zwei Leitungszweigen (L1, L2) aufweist, dass drei parallele Fließkreise, von denen mindestens zwei Fließkreise durch einen differenziellen Druckaufnehmer bzw. Differenzdruckaufnehmer (216) verbunden sind, aufweist, wobei die drei Fließkreise eine Analogie zur thomsonschen Brücke darstellen, wobei die Anordnung aus einem Zulauf (201) besteht, der in eine Verzweigung (202) mündet und sich in zwei Leitungszweige (L1, L2) aufteilt, wobei der erste Leitungszweig (L1) ein druckschwächendes Element (203), einen sich anschließenden Verzweigungspunkt (204) zu einem differenziellen Druckaufnehmer bzw. Differenzdruckaufnehmer (216) und ein druckschwächendes Element (205) in der Zuleitung zu einer Zusammenführung (206) umfasst, die in eine Auslassleitung (207) mündet, und dass der von dem Verzweigungspunkt (202) ausgehende zweite Leitungszweig (L2) ein druckschwächendes Element (212) umfasst, das zu einer Verzweigung (211) führt, die zum einen in ein zu einer Zusammenführung (209) führendes großvolumiges Gefäß (210) und zum anderen zu einer Widerstandskapillare (213) führt, die in der Zusammenführung (215) mit dem differenziellen Druckaufnehmer bzw. Differenzdruckaufnehmer (216) und ferner mit einer Widerstandskapillare (214) in der von der Zusammenführung (215) zu einer weiteren Verzweigung (209) geführten Leitung in Verbindung steht, wobei die Widerstandskapillare (214) auslassseitig über die Verzweigung (209) mit einem druckabschwächenden Element (208) verbunden ist, das über einen Leitungsabschnitt in die Zusammenführung (206) und somit in die Auslassleitung (207) mündet.

4. Viskosimeter zur Messung der relativen, intrinsischen oder inhärenten Viskosität einer Lösung (13) in einem Lösungsmittel (12), mit mindestens einem Strömungswiderstand (15, 16; 27 bis 30) und einer Eingabestelle (20, 21; 36; 38) für die zu untersuchende Lösung (13) in einem Leitungssystem (14, 22; 24 bis 26, 31) sowie jeweiligen Druckmessern (17, 18; 33) an dem Strömungswiderstand (15, 16; 27 bis 30), die mit einem Differentialverstärker (19) gekoppelt sind,
**dadurch gekennzeichnet,**
**dass** das Viskosimeter (40) Strömungswiderstände (15, 16; 27 bis 30), wie scheiben- oder blattförmige Venturi-Düsen oder andersartige KV-Strömungswiderstände mit kleinstmöglicher Dicke und kleinem Volumen im Verhältnis zu allen anderen parallelen und nachfolgenden Kapillaren aufweist, wobei diese Strömungswiderstände unmittelbar hinter den Eingabestellen der Stromaufteilung eingebracht sind und im anderen Teilzweig hinter der Stromaufteilung eine lange Röhre mit einem großen Innendurchmesser folgt, die außerdem dadurch näher bestimmt ist, dass das Fassungsvermögen dieser langen Röhre das 100- bis 1000fache des KV-Strömungswiderstandes beträgt.

5. Viskosimeter nach einem der Ansprüche 1 bis 4,
**dadurch gekennzeichnet,**
**dass** die Durchströmöffnung des Strömungswiderstandes kreisoder schlitzförmig ist oder eine andere geeignete geometrische Form aufweist. Im Falle der MST-Komponente könnte dies ein V-förmiger oder rechteckiger Kanal sein.

6. Viskosimeter nach einem der Ansprüche 1 bis 5,
**dadurch gekennzeichnet,**
**dass** der KV-Strömungswiderstand mehrere lochartige Durchbrechungen von $0,1\ \mu$ bis $150\ \mu$ aufweist, wobei die Größe einer jeden Durchbrechung von der Gesamtanzahl der Durchbrechungen abhängig ist.

7. Viskosimeter nach einem der Ansprüche 1 bis 6,
**dadurch gekennzeichnet,**
**dass** in einer Brückenanordnung (25, 26, 32) in zwei parallel verlaufenden Flusswegen (25, 26) von jeweils zwei oder drei in Serie angeordneten Strömungswiderständen (27, 28; 29, 30) mindestens einer als KV-Strömungswiderstand mit kleinstmöglicher Dicke ausgebildet ist.

8. Viskosimeter nach einem der Ansprüche 1 bis 7,
**dadurch gekennzeichnet,**
**dass** sich ein KV-Strömungswiderstand in Flussrichtung gesehen unmittelbar hinter einer Gel-Permeations-Chromatographie-Säule (GPC-Säule 38) befindet. Ebenso hinter der Einlassleitung 24 unmittelbar am Verzweigungspunkt in einem Zweig 26 der KV-Strömungswiderstand eingebracht wird.

9. Viskosimeter nach den Ansprüchen 1 bis 8,
**dadurch gekennzeichnet,**
**dass** im Leitungsnetz (14, 22; 24 bis 26, 31) bzw. in den Leitungszweigen (L1, L2) mindestens ein volumetrisch großes Rückhaltegefäß (23, 34) angeordnet ist.

10. Viskosimeter nach einem der Ansprüche 1 bis 9,
**dadurch gekennzeichnet,**
**dass** im Leitungsnetz (24, 31) bzw. in den Leitungszweigen (L1, L2) ein Refraktionsdetektor (41) und/
oder ein methodisch anders arbeitender Detektor
angeordnet ist.

11. Viskosimeter nach einem der Ansprüche 1 bis 10,
**dadurch gekennzeichnet,**
**dass** das Leitungsnetz (24 bis 26, 31) bzw. die Leitungszweige (L1, L2) in einem thermisch konstanten abgeschlossenen Raum (39), vorzugsweise in
einem thermisch regelbaren Wärmebad, angeordnet sind.

Fig.1

**Fig. 1A**

12

12

13

11

10

Fig. 2

**Fig. 3**

Fig. 4

Fig. 5

Fig. 6

log n rel

Fig. 7

EP 1 152 234 A2

Fig. 8

**Fig. 9**

Fig.10

Fig.11

31

41

40

24

Fig.12

LASER

42

41

43

24

Fig.13

EP 1 152 234 A2

Fig.14

LASER

42

24

26

Fig.15

EP 1 152 234 A2

Anhang

$$n = \frac{\pi \cdot R^4}{8 \cdot L} \cdot \frac{\triangle P}{Q} \qquad (1)$$

$$\dot{\gamma} = \frac{4}{\pi \cdot R^3} \cdot Q \qquad (2)$$

$$\sigma = \frac{R}{2 \cdot L} \cdot \triangle P \qquad (3)$$

$$I = Q = A_1 \cdot \sqrt{l \cdot \left[\left(\frac{A_1}{A_2}\right) - 1\right]^{\frac{2 \cdot \triangle P}{}}} \qquad (4)$$

Fig.16

Fig. 17